# EUROPÄISCHE PATENTSCHRIFT

(11) **EP 1 529 946 B1**
(45) Veröffentlichungstag und Bekanntmachung des Hinweises auf die Patenterteilung: **06.02.2008**
(21) Anmeldenummer: 04105179.8
(22) Anmeldetag: 20.10.2004
(51) Int. Cl.: F02D 41/14

(54) **Dämpfungssystem mit einem LOLIMOT-Modell gegen Antriebsstrangschwingungen**
System using a lolimot-model for damping drive train vibrations
Système utilisant un modèle LOLIMOT pour amortir les vibrations d'une chaîne cinématique

(30) Priorität: 07.11.2003 DE 10351957
(43) Veröffentlichungstag der Anmeldung: 11.05.2005
(73) Patentinhaber: Siemens VDO Automotive AG, 93055 Regensburg (DE)
(72) Erfinder: Baumann, Julian, 76185 Karlsruhe (DE); Schlegl, Thomas, 93055 Regensburg (DE); Torkzadeh, Dara Daniel, 76135 Karlsruhe (DE)

(56) Entgegenhaltungen:
- EP-A- 0 924 421
- EP-A- 1 529 947
- DE-A1- 10 113 538
- GB-A- 2 262 818

## Beschreibung

Die Erfindung betrifft eine Dämpfungseinrichtung gemäß dem Oberbegriff des Anspruchs 1 und ein Dämpfungsverfahren gemäß dem Oberbegriff des Anspruchs 8.

Durch technische Verbesserungen insbesondere bei der Direkteinspritztechnik konnte die Dynamik der Leistungsentfaltung von Brennkraftmaschinen deutlich gesteigert werden. Dadurch kommt es zu ausgeprägten Lastsprüngen in Antriebssträngen von Kraftfahrzeugen, die diese Brennkraftmaschinen zum Antrieb verwenden. Lastsprünge stellen eine breite Anregung im Frequenzbereich für das schwingungsfähige System Antriebsstrang dar. Dadurch können niederfrequente Torsionsschwingungen im Antriebsstrang ausgelöst werden. Die Eigenform der tiefsten Torsionsschwingung besteht dabei aus einer Winkelverdrehung des Motors gegenüber den angetriebenen Rädern. Eine solche Schwingung macht sich besonders als Ruckeln in Längsrichtung des Fahrzeugs bemerkbar und reduziert die Fahrbarkeit des Kraftfahrzeugs beträchtlich. Des Weiteren stellen diese Schwingungen wie auch die Lastsprünge selbst eine hohe Belastung für den Antriebsstrang dar, wodurch der Verschleiß erhöht wird und es zu Materialermüdungen kommen kann.

Eine bekannte Möglichkeit, die Schwingungen und deren negative Auswirkungen zu unterdrücken, besteht darin, die Schwingung aus einem von einem Drehzahlsensor an der Brennkraftmaschine aufgenommenen Messsignal herauszufiltern, und durch die Brennkraftmaschine ein Gegendrehmoment zur Schwingung aufzubringen. Dazu wird das Signal des Drehzahlsensors mit einem Tiefpass gefiltert und phasenverschoben.

Das beschriebene Verfahren weist jedoch den Nachteil auf, dass es nahe der Stabilitätsgrenze betrieben werden muss, um wirksam zu sein. Problematisch ist hierbei insbesondere, dass das Dämpfungsdrehmoment mit einer Frequenz aufgebracht wird, die der Torsionsresonanzfrequenz entspricht. Deswegen führen bereits kleine Fehler bei der Berechnung des Gegendrehmoments oder kleine Änderungen im mechanischen Verhalten des Antriebsstrangs unter Umständen zu Instabilitäten. Dabei ist zu berücksichtigen, dass sich die mechanischen Eigenschaften des Antriebsstrangs im Allgemeinen über die Lebensdauer eines Kraftfahrzeugs verändern, beispielsweise kommt es zu Verschleiß an Zahnrädern oder zu einer Änderung der elastischen Eigenschaften von Wellenkupplungen. Ein weiterer Nachteil des Verfahrens ist, dass nur auf bereits existierende Schwingungen reagiert werden kann, die Dämpfung setzt also erst ein, wenn die hohe Belastung für den Antriebsstrang bereits vorhanden ist.

Die EP 0 924 421 A offenbart als nächstliegender Stand der Technik eine Kontrollvorrichtung zur Kraftstoffeinspritzung, die eine Basiskraftstoffeinspritzmenge in Abhängigkeit von dem Zustand der Brennkraftmaschine bestimmt. Weiterhin wird vorgeschlagen, ein Korrekturmittel einzusetzen, um eine Torsionsschwingung des Abtriebswellensystems der Brennkraftmaschine durch die nachfolgende Kraftstoffeinspritzung basierend auf der Basiskraftstoffeinspritzmenge vorherzusagen, um die tatsächlich eingespritzte Kraftstoffmenge festzusetzen, so dass eine Torsionsschwingung unterdrückt wird. Zur Vorhersage der Torsionsschwingung wird die Differenzialgleichung eines vereinfachten Torsionsschwingermodells verwendet, das die Brennkraftmaschine, das Getriebe, das Fahrzeug und die Verbindungswellen darstellt.

Aus der GB 2 262 818 A ist es bekannt, mit einem Kontrollmodell Schwingungen des Antriebsstrangs vorherzusagen, wobei eine aus einer Differentialgleichung eines Mehr-Massen-Schwinger-Modells abgeleitete Übertragungsfunktion zur Darstellung des mechanischen Verhaltens des Antriebsstrangs verwendet wird.

Der Erfindung liegt also die Aufgabe zugrunde, mit möglichst geringem Aufwand Schwingungen im Antriebsstrang zu unterdrücken, wobei insbesondere hohe Belastungen des Antriebsstrangs und Ruckelbewegungen des Fahrzeugs vermieden werden sollen.

Die Aufgabe wird mit einer Dämpfungseinrichtung gemäß Anspruch 1 und einem Dämpfungsverfahren gemäß Anspruch 8 gelöst.

Die Erfindung geht von der physikalischen Erkenntnis aus, dass die Brennkraftmaschine, der Antriebsstrang oder der Drehzahlsensor eine Totzeit aufweisen, welche die Regelung von Dämpfungsdrehmomenten zur Unterdrückung von Torsionsschwingungen im Antriebsstrang erschwert. Beispielsweise führt eine erhöhte Kraftstoffzufuhr nicht unmittelbar zu einem erhöhten Antriebsdrehmoment der Brennkraftmaschine, da die Kraftstoffmenge getaktet in die Brennräume eingespritzt wird, wodurch Zeitverluste entstehen.

Vorteilhafterweise wird deshalb im Rahmen der Erfindung ein Prädiktorglied eingesetzt, um eine mechanische Zustandsgröße des Antriebsstrangs als Antwort auf eine Stellgröße zu ermitteln. Dies hat den Vorteil, dass die Stellgröße in Abhängigkeit von der ermittelten mechanischen Zustandsgröße festgelegt werden kann und die Brennkraftmaschine mit der so modifizierten Stellgröße angesteuert wird. Damit wird bereits die Anregung von Torsionsschwingungen unterdrückt.

Die Stellgröße für die Brennkraftmaschine kann beispielsweise die der Brennkraftmaschine zugeführte Kraftstoffmenge sein. Es ist jedoch auch vorstellbar, andere Stellgrößen, wie beispielsweise die Drosselklappenstellung zu beeinflussen.

Die mechanische Zustandsgröße gibt vorzugsweise die zeitliche Veränderung der Torsion des Antriebsstrangs wieder, um Torsionsschwingungen deutlich von den anderen im Betrieb üblichen Belastungen zu unterscheiden.

Die erfindungsgemäße Vorrichtung berücksichtigt vorzugsweise das eingestellte Übersetzungsverhältnis des Getriebes und andere Übersetzungen im Antriebsstrang. So kann die Dämpfungseinrichtung einen Signaleingang zur Aufnahme eines das Übersetzungsverhältnis des Getriebes wiedergebenden Signals umfassen.

Das Prädiktorglied weist erfindungsgemäß ein Modell der Brennkraftmaschine und oder des Antriebsstrangs auf, um die mechanische Zustandsgröße zu ermitteln. Ein Modell hat den Vorteil, dass es eine rechnerische Vorhersage der mechanischen Antwort auf vorgegebene Ansteuerungen ermöglicht.

Vorzugsweise ist das in dem Prädiktorglied enthaltene Modell im wesentlichen totzeitfrei. Da besonders die Brennkraftmaschine aufgrund des Verbrennungsprozesses eine Totzeit aufweist, hat dies den Vorteil eines Zeitgewinns. Wird vor einem Regelungseingriff die tatsächliche Antwort des Antriebsstrangs auf die Stellgröße abgewartet, so können während der dabei verstreichenden Totzeit weitere schwingungsanregende Impulse durch die Stellgröße gegeben werden, ohne dass dagegen geregelt wird. Wird dagegen die Antwort zeitnah, d.h. so schnell es die Recheneinheit des Modells erlaubt, berechnet, so können Torsionsschwingungen bereits im Anfangsstadium unterdrückt werden oder es kann die Anregung von Torsionsschwingungen unterdrückt werden. Auch der Antriebsstrang oder der Drehzahlsensor können eine Totzeit aufweisen.

Vorteilhafterweise weist das Modell des Prädiktorglieds adaptierbare Modellparameter auf. Dies hat den Vorteil, dass das Modell angepasst werden kann, falls sich die mechanischen Eigenschaften der Brennkraftmaschine, des Antriebsstrangs oder des Fahrzeugs ändern. Beispielsweise kann der Antriebsstrang aufgrund von Verschleißerscheinungen seine mechanischen Eigenschaften über die Lebenszeit des Kraftfahrzeugs verändern oder durch Zuladung des Kraftfahrzeugs kann die Masse des Kraftfahrzeugs verändert werden. Vorzugsweise weist die Dämpfungseinrichtung deshalb eine Adaptionseinheit zur Adaption der Modellparameter während der Fahrt auf. Dadurch kann das Modell jederzeit geänderten mechanischen Eigenschaften angepasst werden. Es ist außerdem vorstellbar, die Parameter geschwindigkeitsabhängig zu verändern, beispielsweise um einen höheren Luftwiderstand zu berücksichtigen. In einer vorteilhaften Ausführungsform der Erfindung stützt die Adaptionseinheit die Modellzustände. Die Adaptionseinheit kann dazu Messwerte, die ohnehin im Fahrzeug gemessen werden, wie beispielsweise die Drehzahl der Brennkraftmaschine oder der angetriebenen Räder, verwenden. Damit können Störungen und Modellungenauigkeiten unmittelbar korrigiert werden, was die Qualität der Vorhersage des Prädiktorglieds erhöht.

In einer nicht erfindungsgemäßen Ausführungsform stellt ein Mehrmassenschwingermodell die Brennkraftmaschine und den Antriebsstrang mit der Fahrzeugmasse im Modell dar. Dabei können je nach benötigter Modellierungsgenauigkeit zwei, drei, vier oder mehr Modellmassen durch Feder-/Dämpfer-elemente miteinander verbunden werden. Dies hat den Vorteil, dass das schwingfähige System aus Brennkraftmaschine, Antriebsstrang und Fahrzeugmasse zwar vereinfacht aber dennoch realitätsnah abgebildet werden kann.

Um die erste Torsionsschwingungseigenform des Antriebsstrangs zu erfassen kann vorteilhafterweise ein Zwei-Massen-Torsionsschwinger-Modell als Mehrmassenschwingermodell eingesetzt werden. Diese Ausführungsform ist jedoch nicht erfindungsgemäß. Das Zwei-Massen-Torsionsschwinger-Modell umfasst zwei Massenträgheitsmomente und ein Feder-/Dämpferelement, das diese Massenträgheitsmomente verbindet. Das Feder-/Dämpferelement besteht aus einer Drehfeder und einem Torsionsdämpfer. Es ist jedoch auch vorstellbar, nur eine Drehfeder anzuordnen und die Dämpfung des Antriebsstrangs unberücksichtigt zu lassen, wodurch das Modell vereinfacht würde. Dies ist insbesondere bei sehr kleinen Dämpfungen des Antriebsstrangs vorteilhaft. Vorzugsweise stellt das erste Massenträgheitsmoment die bewegten Teile der Brennkraftmaschine dar, beispielsweise die Kurbelwelle, die Pleuelstangen und die Kolben. Mit dem zweiten Massenträgheitsmoment werden die Räder und die Fahrzeugmasse modelliert, wobei die Fahrzeugmasse in die Berechnung des Massenträgheitsmoments mit einem Trägheitsradius eingeht, der im wesentlichen gleich dem Radius der Räder ist. Das Modell berücksichtigt jeweils das eingestellte Übersetzungsverhältnis des Getriebes. Alternativ ist auch vorstellbar, zusätzlich weitere Massenträgheitsmomente beispielsweise für das Getriebe in das Modell einzuführen, wodurch sich die Vorhersagegenauigkeit des Modells erhöhen kann.

Vorteilhafterweise sind die Modellparameter Konstanten der Massenträgheitsmomente oder des Feder-/Dämpferelements. So kann ein Modellparameter den Wert des einen Massenträgheitsmomentes, der andere Modellparameter den Wert des anderen Massenträgheitsmomentes, ein dritter Modellparameter die Drehfederkonstante des Antriebsstrangs und ein vierter Modellparameter die Torsionsdämpfungskonstante des Antriebsstrangs wiedergeben. Im Zusammenhang mit der Adaptionseinheit zur Adaption der Modellparameter kann so das Zwei-Massen-Torsionsschwinger-Modell geänderten mechanischen Eigenschaften des Antriebsstrangs und anderer Komponenten angepasst werden. So kann beispielsweise das Massenträgheitsmoment, das die Räder mit der Fahrzeugmasse modelliert um einen entsprechenden Betrag erhöht werden, falls eine höhere Zuladung des Fahrzeugs vorliegt. Dies hat den Vorteil, dass die Vorhersagegenauigkeit des Modells nicht unter einer Veränderung der Fahrzeugmasse leidet. Weiterhin ist vorstellbar, dass sich die Federsteifigkeit des Antriebsstrangs über die Lebensdauer des Fahrzeugs verändert. Über die Adaptionseinheit kann in einem solchen Fall vorteilhafterweise die Drehfederkonstante des Antriebsstrangs an die veränderten mechanischen Eigenschaften angepasst werden. Außerdem kann auch die Torsionsdämpferkonstante mit der Adaptionseinheit geänderten mechanischen Gegebenheiten angepasst werden. In einer weiteren vorteilhaften Ausführungsform werden die Modellparameter in Abhängigkeit von dem eingestellten Übersetzungsverhältnis des Antriebsstrangs festgelegt. Vorteilhafterweise werden in einem Speicher für jedes Übersetzungsverhältnis ein Satz Modellparameter vorgehalten. Bei Änderung des Übersetzungsverhältnisses werden die eventuell angepassten Modellparameter des letzten Übersetzungsverhältnisses wieder abgespeichert. Dies hat den Vorteil, dass das Prädiktorglied bei Vorgabe eines geänderten Übersetzungsverhältnisses unmittelbar ein passendes Modell zur Verfügung hat.

Erfindungsgemäß ist das Modell, das im Prädiktorglied enthalten ist, ein LOLIMOT-Modell (Local Linear Model Tree), welches das mechanische Verhalten der Brennkraftmaschine oder des Antriebsstrangs mit Fahrzeugmasse an Hand von vorgegebenen linearen Abbildungsfunktionen darstellt. Als Eingangsgrößen für das LOLIMOT-Modell kommen beispielsweise die Torsionsdrehgeschwindigkeiten der Brennkraftmaschine und der Räder und das vorgegebene Drehmoment der Brennkraftmaschine in Betracht. Alternativ ist auch vorstellbar, andere Größen zu berücksichtigen, beispielsweise die Kraftstoffzufuhr zur Brennkraftmaschine oder die Drosselklappenstellung. Das LOLIMOT-Modell berechnet aus den Eingangsgrößen vorzugsweise eine vorhergesagte Differenz der Drehwinkelgeschwindigkeiten der Brennkraftmaschine und der Räder oder eine andere die Torsion des Antriebsstrangs wiedergebende Größe. Das LOLIMOT-Modell verknüpft dabei mehrere lineare Abbildungsfunktionen, die das teilweise annähernd lineare Verhalten der Brennkraftmaschine und des Antriebsstrangs wiedergeben.

Vorteilhafterweise weist das LOLIMOT-Modell Gewichtungsfunktionen auf, die den einzelnen Abbildungsfunktionen zugeordnet sind. Die Gewichtungsfunktionen können beispielsweise Gausssche Normalverteilungen sein, mit denen die linearen Abbildungsfunktionen multipliziert werden. LOLIMOT-Modelle mit linearen Abbildungsfunktionen und Gewichtungsfunktionen sind näher in der Veröffentlichung "Local Linear Model Trees (LOLIMOT) Toolbox for Nonlinear System Identification" von O. Nelles et al. (12^{th} IFAC Symposium on System Identification, St. Barbara, USA, 2000) beschrieben, dessen Inhalt damit der vorliegenden Anmeldung zuzurechnen ist. Die Kombination aus linearen Abbildungsfunktionen und Gewichtungsfunktionen lässt einerseits eine leichte Anpassung des Modells an die tatsächlichen mechanischen Eigenschaften zu und bietet außerdem Vorteile in Bezug auf die Rechengeschwindigkeit, da keine rechenintensiven nichtlinearen Gleichungen berechnet werden müssen.

Vorzugsweise weist die Gewichtungsfunktion Parameter auf, die als Modellparameter beispielsweise von der Adaptionseinheit adaptiert werden können. Damit kann die Gewichtung der einzelnen linearen Abbildungsfunktionen angepasst werden. Ein weiterer Vorteil besteht darin, dass die Trennschärfe der einzelnen Gewichtungsfunktionen geändert werden kann, wodurch unter Umständen eine bessere Anpassung des Modells an die Realität möglich ist.

Vorteilhafterweise werden die Parameter der linearen Abbildungsfunktionen des LOLIMOT-Modells als Modellparameter von der Adaptionseinheit angepasst. Dies kann beispielsweise über einen Regressionsalgorithmus bewerkstelligt werden, wie er in der oben bezeichneten Veröffentlichung von O. Nelles et al. beschrieben ist. Weiterhin ist vorstellbar, weitere Abbildungsfunktionen und Gewichtungsfunktionen im Rahmen der Adaption zu generieren, um das Modell dem mechanischen Verhalten des Antriebsstrangs besser anzupassen.

Die Erfindung umfasst ferner eine Motorsteuerung mit einer Dämpfungseinrichtung in einer der beschriebenen Ausführungsformen. Eine solche Motorsteuerung ist besonders dazu geeignet, die Brennkraftmaschine so anzusteuern, dass verschleißerhöhende Belastungsspitzen und Ruckelbewegungen in Längsrichtung des Fahrzeugs vermieden werden.

Des Weiteren umfasst die Erfindung ein Dämpfungsverfahren, das beispielsweise mit einer der beschriebenen Dämpfungseinrichtungen durchgeführt werden kann.

Die Erfindung wird nachfolgend anhand der beigefügten Figuren näher beschrieben. Es zeigen:
- Figur 1: eine schematische Darstellung einer Dämpfungseinrichtung,
- Figur 2: eine schematische Darstellung eines erfindungsgemäßen LOLIMOT-Modells und
- Figur 3: eine schematische Darstellung eines nicht erfindungsgemäßen Zwei-Massen-Torsionsschwinger-Modells.

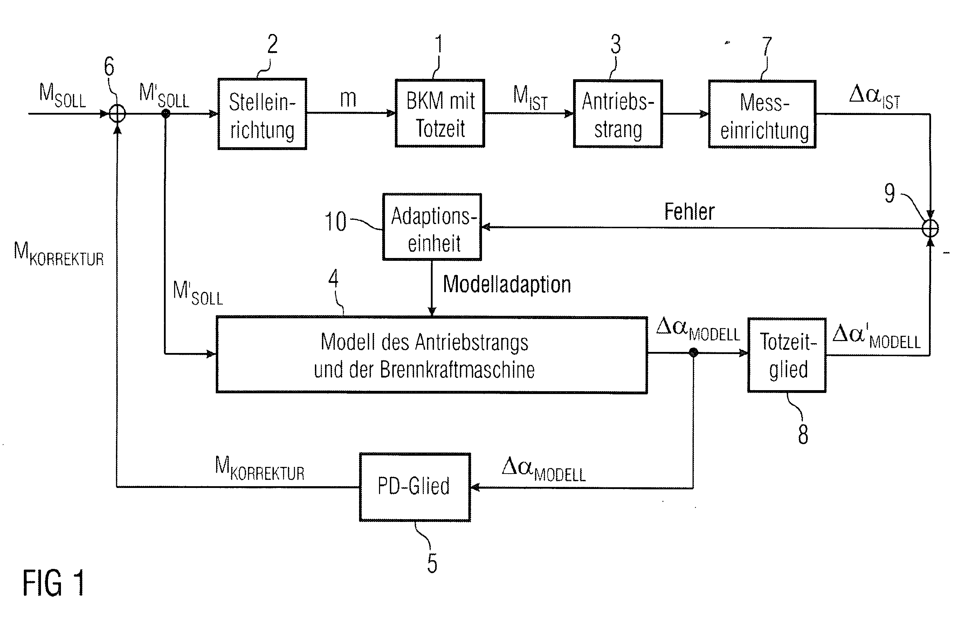

Figur 1 zeigt schematisch ein regelungstechnisches Ersatzschaltbild, bei dem eine Brennkraftmaschine 1 von einer Stelleinrichtung 2 angesteuert wird. In der Zeichnung ist dargestellt, dass die Stellgröße, mit der die Brennkraftmaschine 1 von der Stelleinrichtung 2 angesteuert wird, die Kraftstoffmenge m eines Einspritzvorgangs ist. Tatsächlich kann die Stelleinrichtung 2 weitere Parameter der Brennkraftmaschine 1 steuern, beispielsweise die Drosselklappenstellung.

Die Brennkraftmaschine 1 treibt über einen Antriebsstrang 3 die Räder eines Fahrzeugs an. Der Antriebsstrang 3 umfasst mehrere Wellen, ein Getriebe, ein Differenzial und Gelenke zur Momentenübertragung zwischen den einzelnen Komponenten. Der Antriebsstrang 3 wird von der Brennkraftmaschine 1 mit dem Moment M_{IST} angetrieben.

Die Stelleinrichtung 2 stellt die einzuspritzende Kraftstoffmenge m entsprechend der Vorgabe des Antriebsmoments M'_{SOLL} der Brennkraftmaschine 1 ein. Die Stelleinrichtung 2 bedient sich dabei eines Steuerverfahrens, das in verschiedenen Ausführungsformen dem Fachmann hinlänglich bekannt ist.

Die Dämpfungseinrichtung umfasst ein Prädiktorglied 4, das ein Modell der Brennkraftmaschine 1 und des Antriebsstrangs 3 enthält. Das Modell ist ein Torsionsschwinger mit zwei Massenträgheitsmomenten und einem Drehfederdämpferglied zwischen den beiden Massenträgheitsmomenten. Hierbei entspricht ein Massenträgheitsmoment dem Massenträgheitsmoment der bewegten Teile der Brennkraftmaschine 1. Das Drehfederdämpferelement stellt den Antriebsstrang 3 mit seinen Komponenten dar. Das zweite Massenträgheitsmoment des Modells entspricht den angetriebenen Rädern und der Masse des Fahrzeugs, die mit einem Trägheitsradius entsprechend dem Radius der Räder in die Berechnung des zweiten Massenträgheitsmomentes eingehen. M'_{SOLL} wird als Belastungsmoment auf das Modell aufgebracht. Das Prädiktorglied 4 errechnet hieraus anhand des Modells die Winkelgeschwindigkeit der Welle der Brennkraftmaschine 1, an der der Antriebsstrang 3 angeschlossen ist, und die Winkelgeschwindigkeit der angetriebenen Räder. Hierbei berücksichtigt das Modell das eingestellte Übersetzungsverhältnis des Getriebes. Der Ausgang des Prädiktorglieds 4 enthält ein Signal, das die Differenz Δα_{MODELL} der beschriebenen Winkelgeschwindigkeiten darstellt.

Die Differenz Δα_{MODELL} entspricht der zeitlichen Veränderung der Torsion des Antriebsstrangs 3 zwischen der Brennkraftmaschine 1 und den angetriebenen Rädern. Um eine Torsionsschwingung möglichst wirksam zu unterdrücken, wird entsprechend einer klassischen mechanischen Dämpfung von einem PD-Glied 5 ein Dämpfungsdrehmoment M_{KORRREKTUR} entsprechend der Differenz Δα_{MODELL}, die die zeitlichen Veränderung der Torsion wiedergibt, errechnet. Das PD-Glied 5 entspricht einem an sich bekannten PD-Regler, wobei die Kennzahlen für den proportionalen und den differenziellen Teil in Versuchen angepasst werden. Dabei wirkt ein größerer D-Anteil stabilisierend.

Das vom PD-Glied 5 berechnete Korrektormoment M_{KORREKTUR} wird zu einem vom Fahrer vorgegebenen Drehmoment M_{SOLL} der Brennkraftmaschine 1 in einem Addierer 6 addiert. Das Ergebnis dieser Addition ist das Drehmoment M'_{SOLL}, welches das Eingangssignal für die Stelleinrichtung 2 und das Prädiktorglied 4 darstellt. Im Einzelnen können in diesem Kreislauf durch mehrere iterative Schritte immer weiter verbesserte Momentenvorgaben M'_{SOLL} errechnet werden.

Die dargestellte Dämpfungseinrichtung unterdrückt insbesondere deswegen sehr wirkungsvoll Torsionsschwingungen im Antriebsstrang 3, da sie nicht wie ein Regelverfahren aufgrund von Totzeiten im Regelkreis stabilitätskritisch ist. Die Brennkraftmaschine 1 weist nämlich eine Totzeit auf, die hauptsächlich durch den Brennvorgang bedingt ist. Die Totzeit der Brennkraftmaschine 1 beträgt bei einer Drehzahl von 800 Umdrehungen pro Minute (Upm) etwa 40 ms. Die Totzeit ist indirekt proportional zur Drehzahl. Aufgrund dieser Totzeit ist eine Messung der mechanischen Antwort des Antriebsstrangs 3 und der Brennkraftmaschine 1 auf die Stellgröße m der Stelleinrichtung 2 erst nach dieser Totzeit möglich.

Dagegen weist das Prädiktorglied 4 mit dem Modell des Antriebsstrangs 3 und der Brennkraftmaschine 1 im wesentlichen keine Totzeit auf. Die Zeitspanne, nach der am Signalausgang des Prädiktorglieds 4 die Antwort auf die Eingangsgröße M'_{SOLL} bereitsteht, hängt nur von der Rechengeschwindigkeit des Prädiktorglieds 4 ab. Die Zeitspanne ist bei Einsatz üblicher mikroelektronischer Bauteile weit geringer als die Totzeit der Brennkraftmaschine 1. Daher ist eine zeitnahe Berechnung eines Korrekturmoments M_{KORREKTUR} möglich.

Zur Überprüfung der Vorhersagequalität und zu einer eventuellen Modelladaption des Modells des Prädiktorglieds 4 wird mit einer Messeinrichtung 7 die tatsächliche zeitliche Veränderung Δα_{IST} der Torsion des Antriebsstrangs 3 gemessen. Die Messeinrichtung 7 umfasst einen Drehzahlsensor an der Brennkraftmaschine 1, der die Drehzahl der Brennkraftmaschine 1 misst, und Drehzahlsensoren an jedem angetriebenen Rad. Üblicherweise werden in einem Kraftfahrzeug ohnehin die Drehzahlen der Brennkraftmaschine 1 und der Räder gemessen, beispielsweise im Rahmen einer Antriebsschlupfregelung. Die Messeinrichtung 7 errechnet aus den Signalen der einzelnen Drehzahlsensoren die zeitliche Veränderung Δα_{IST} der Torsion des Antriebsstrangs 3. Um diese gemessene zeitliche Veränderung Δα_{IST} der Torsion des Antriebsstrangs 3 mit der errechneten zeitlichen Veränderung Δα_{MODELL} vergleichen zu können, ist es notwendig, die berechnete Zustandsgröße Δα_{MODELL} mit einem Totzeitglied 8 zeitlich zu verschieben. In einer Vergleichereinheit 9 wird die mit dem Totzeitglied 8 und dem Prädiktorglied 4 errechnete zeitliche Veränderung Δα'_{MODELL} der Torsion des Antriebsstrangs 3 mit der gemessenen zeitlichen Veränderung Δα_{IST} der Torsion des Antriebsstrangs 3 verglichen. Das Ergebnis dieses Vergleichs stellt den Fehler der Vorhersage des Prädiktorglieds 4 dar. Der Fehler dient als Eingangsgröße für eine Adaptionseinheit 10, die die Aufgabe hat, das Modell des Prädiktorglieds 4 zu adaptieren. Dies geschieht durch Parameteranpassung, beispielsweise der Feder- und Dämpfungskonstanten des Zwei-Massen-Schwinger-Modells. Dadurch ist gewährleistet, dass das Prädiktorglied 4 auch bei veränderten mechanischen Eigenschaften der Brennkraftmaschine 1 und des Antriebsstrangs 3 weiterhin richtig die Antwort des Antriebsstrangs 3 auf ein Antriebsmoment M'_{SOLL} vorhersagt.

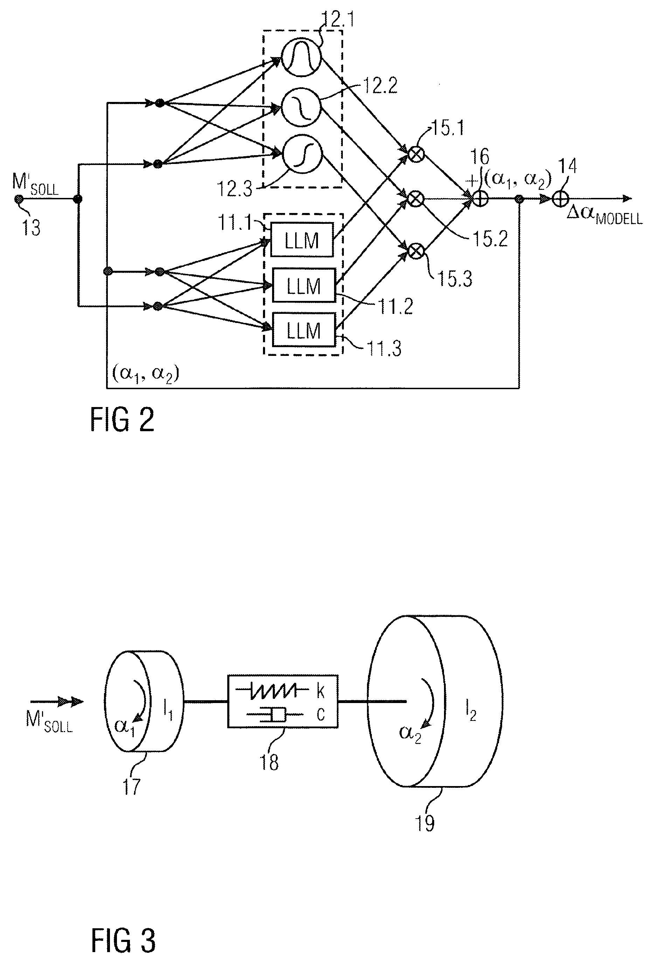

In Figur 2 ist schematisch der Aufbau der erfindungsgemäßen Ausführungsform des in dem Prädiktorglied 4 enthaltenen LOLIMOT-Modells dargestellt. Das dargestellte LOLIMOT-Modell besteht aus drei lokalen linearen Abbildungsfunktionen (lokale lineare Modelle, LLM) 11.1-11.3 und den dazu gehörigen Gewichtungsfunktionen 12.1-12.3. Am Eingang 13 liegt ein Signal an, welches das vorgegebenes Antriebsmoment M'_{SOLL} der Brennkraftmaschine enthält. Das LOLIMOT-Modell berechnet den Einfluss des vorgegebenen Antriebsmomentes M'_{SOLL} auf das schwingungsfähige System des Antriebsstrangs. Die lokalen linearen Abbildungsfunktionen 11.1-11.3 berechnen jeweils einen Vektor, dessen zwei Komponenten die Winkelgeschwindigkeiten α₁, α₂ der Brennkraftmaschine und der angetriebenen Räder sind. Das LOLIMOT-Modell verwendet den Vektor der Winkelgeschwindigkeiten α₁, α₂ als Eingangssignal, da das vorherzusagende mechanische Verhalten des Antriebsstrangs von den aktuellen Winkelgeschwindigkeiten α₁, α₂ abhängig ist. In einem Differenzenglied 14 wird die Differenz der beiden Komponenten des Vektors der Winkelgeschwindigkeiten α₁, *α*₂ berechnet. Diese Differenz entspricht der zeitliche Veränderung Δα_{MODELL} der Torsion des Antriebsstrangs und wird am Ausgang des LOLIMOT-Modells ausgegeben.

Im LOLIMOT-Modell existieren für bestimmte Bereiche der Zustandsgrößen Antriebsmoment M'_{SOLL} und Drehwinkelgeschwindigkeiten α₁, α₂ der Brennkraftmaschine und der Räder verschiedene lokal lineare Abbildungsfunktionen 11.1-11.3, deren Anteil am Ergebnis durch die Gewichtungsfunktionen 12.1-12.3 gesteuert wird. In Multiplikatorgliedern 15.1-15.3 wird das Ergebnis einer der lokalen linearen Abbildungsfunktionen 11.1-11.3 bestehend aus einem Vektor mit zwei Komponenten mit dem Skalar der entsprechenden Gewichtungsfunktion der Gewichtungsfunktionen 12.1-12.3 multipliziert. So wird das Ergebnis der lokalen linearen Abbildungsfunktion 11.1 im Multiplikatorglied 15.1 mit der entsprechenden Gewichtungsfunktion 12.1 multipliziert. Entsprechendes gilt für die lokalen linearen Abbildungsfunktionen 11.2 und 11.3 und die Gewichtungsfunktion 12.2, 12.3 mit den Multiplikatorgliedern 15.2 und 15.3. Anschließend werden die Vektoren der gewichteten Ergebnisse in einem Summenglied 16 summiert. Diese Summe stellt dann das Ergebnis der Berechnung des LOLIMOT-Modells dar, wobei das Ergebnis die Drehwinkelgeschwindigkeiten α₁, α₂ der Brennkraftmaschine und der angetriebenen Räder enthält.

Zum Anpassen des LOLIMOT-Modells an die mechanischen Eigenschaften des Antriebsstrangs können die Parameter der Gewichtungsfunktion, also beispielsweise deren Filterschärfe und deren Integralwert verändert werden. Des weiteren können die Parameter der lokalen linearen Abbildungsfunktion verändert werden. Es ist außerdem möglich, dem LOLIMOT-Modell weitere lokale lineare Abbildungsfunktionen und Gewichtungsfunktionen hinzuzufügen. Dies kann auch in automatisierter Weise geschehen, wie dies in der oben bezeichneten Veröffentlichung von O. Nelles et al. beschrieben ist.

In Figur 3 ist eine nicht erfindungsgemäße Modellierung des Antriebsstrangs in Form eines Zwei-Massen-Torsionsschwinger-Modells mit Feder-/Dämpferelement gezeigt. Dieses Modell wird verwendet, um die mechanische Reaktion des Antriebsstrangs auf ein Antriebsmoment M'_{SOLL} zu ermitteln. Das Zwei-Massen-Torsionsschwinger-Modell besteht aus einem kleineren Massenträgheitsmoment 17, das die drehenden Teile der Brennkraftmaschine darstellt und den Wert I₁ hat. Das Massenträgheitsmoment 17 dreht sich mit der Winkelgeschwindigkeit der der Brennkraftmaschine α'₁. Über ein Feder-/Dämpferelement 18 ist das erste Massenträgheitsmoment 17 mit einem zweiten Massenträgheitsmoment 19 verbunden. Das Feder-/Dämpferelement 18 besteht aus einer Drehfeder mit der Federkonstante k und einem Drehdämpfer mit der Dämpfungskonstante c. Das zweite Massenträgheitsmoment 19 hat den Wert I₂ und stellt die Räder und die Masse des Fahrzeugs dar, wobei die Masse des Fahrzeugs mit einem Trägheitsradius entsprechend dem Radius der Räder in die Berechnung des Massenträgheitsmoments 19 eingeht. Des weiteren muss bei der Berechnung des Massenträgheitsmoments 19 eine eventuell vorhandene Übersetzung des Antriebsstrangs berücksichtigt werden. Weiterhin ist auch die Winkelgeschwindigkeit der Räder α'₂ nicht die tatsächliche Winkelgeschwindigkeit der Räder, sondern ein Vielfaches oder ein Bruchteil der tatsächlichen Winkelgeschwindigkeit der Räder entsprechend des Übersetzungsverhältnisses des Antriebsstrangs.

Eine Möglichkeit, die Reaktion des Modells des Antriebsstrangs auf ein vorgegebenes Antriebsmoment M'_{SOLL} zu berechnen, ist numerisch in einem Zeitschrittverfahren die Drehwinkelgeschwindigkeiten der Brennkraftmaschine α'₁ und der Räder α'₂ vorherzusagen. Die Differenz der beiden Drehwinkelgeschwindigkeiten ist dann ein Maß für die Torsion des Antriebsstrangs.

Die Parameter des Modells, im dargestellten Fall das erste Massenträgheitsmoment I₁, das zweite Massenträgheitsmoment I₂, die Drehfederkonstante k und die Dämpfungskonstante c, können vorher festgelegt werden oder im Versuch ermittelt werden. So ist beispielsweise das Massenträgheitsmoment der bewegten Teile der Brennkraftmaschine üblicherweise bekannt. Aus der Masse des Fahrzeugs und der Räder kann unter Berücksichtigung des Übersetzungsverhältnisses des Antriebsstrangs das Massenträgheitsmoment 19 berechnet werden. Dabei ist zu beachten, dass das zweite Massenträgheitsmoment 19 abhängig ist von der Zuladung des Fahrzeugs. Sind die beiden Massenträgheitsmomente 17 und 19 bekannt, so können die Drehfederkonstante k und die Drehdämpferkonstante c im Versuch und auch am fahrenden Fahrzeug bei Änderungen des vorgegebenen Antriebsmoments M'_{SOLL} unter Verwendung der Differentialgleichung des Modells berechnet werden. Wie das in Figur 2 dargestellte LOLIMOT-Modell weist auch dieses Modell als maßgebende Zustandsgrößen das vorgegebene Antriebsmoment M'_{SOLL}, die Drehwinkelgeschwindigkeit der Brennkraftmaschine α'₁ und die um das Übersetzungsverhältnis korrigierte Drehwinkelgeschwindigkeit α'₂ der Räder auf.

Die Erfindung ist nicht auf das vorgehend beschriebene Ausführungsbeispiel und das beschriebene Verfahren beschränkt.

## Patentansprüche

1. Dämpfungseinrichtung zur Unterdrückung von Torsionsschwingungen im Antriebsstrang (3) einer Brennkraftmaschine (1), mit
- einer Erfassungseinrichtung (4, 7) zur Ermittlung einer die Torsion des Antriebsstrangs (3) wiedergebenden mechanischen Zustandsgröße (Δα_{MODELL}), wobei die Erfassungseinrichtung (4, 7) ein Prädiktorglied (4) aufweist, das ein Modell des Antriebsstrangs (3) und/oder der Brennkraftmaschine (1) enthält und die mechanische Zustandsgröße (Δα_{MODELL}) als Antwort des Antriebsstrangs (3) und/oder der Brennkraftmaschine (1) auf die Stellgröße (m) an Hand des Modells ermittelt, wobei das Modell adaptierbare Modellparameter aufweist, und
- einer Stelleinrichtung (2) zur Ansteuerung der Brennkraftmaschine (1) mit einer Stellgröße (m) in Abhängigkeit von der ermittelten mechanischen Zustandsgröße (Δα_{MODELL}), wobei
- die Stellgröße (m) in Abhängigkeit von der ermittelten mechanischen Zustandsgröße (Δα_{MODELL}) festgelegt wird und die Brennkraftmaschine (1) mit der so modifizierten Stellgröße (m) angesteuert wird, so dass eine Anregung von Torsionsschwingungen unterdrückt wird,
**dadurch gekennzeichnet,**
**dass** das Modell ein LOLIMOT-Modell ist, welches das mechanische Verhalten der Brennkraftmaschine (1) und/oder des Antriebsstrangs (3) mit Fahrzeugmasse mit vorgegebenen linearen Abbildungsfunktionen (11.1-11.3) darstellt.

2. Dämpfungseinrichtung nach Anspruch 1,
**dadurch gekennzeichnet,**
**dass** das in dem Prädiktorglied (4) enthaltene Modell im wesentlichen totzeitfrei ist, wohingegen die Brennkraftmaschine (1) und/oder der Antriebsstrang (3) und/oder eine zur Drehzahlerfassung eingerichtete Messeinrichtung (7) eine Totzeit (t_{TOT}) aufweisen.

3. Dämpfungseinrichtung nach Anspruch 1 oder 2,
**dadurch gekennzeichnet,**
**dass** eine Adaptionseinheit (10) zur Adaption der Modellparameter während der Fahrt vorgesehen ist.

4. Dämpfungseinrichtung nach einem der Ansprüche 1 bis 3,
**dadurch gekennzeichnet,**
**dass** das LOLIMOT-Modell Gewichtungsfunktionen (12.1-12.3) aufweist, die den einzelnen Abbildungsfunktionen (11.1-11.3) zugeordnet sind.

5. Dämpfungseinrichtung nach einem der Ansprüche 1 bis 4,
**dadurch gekennzeichnet,**
**dass** die Modellparameter Parameter der Gewichtungsfunktionen (12.1.-12.3) des LOLIMOT-Modells sind.

6. Dämpfungseinrichtung nach einem der Ansprüche 1 bis 5,
**dadurch gekennzeichnet,**
**dass** die Modellparameter Parameter der linearen Abbildungsfunktionen (11.1-11.3) des LOLIMOT-Modells sind.

7. Motorsteuerung mit einer Dämpfungseinrichtung nach einem der vorhergehenden Ansprüche.

8. Dämpfungsverfahren zur Unterdrückung von Torsionsschwingungen im Antriebsstrang (3) einer Brennkraftmaschine (1), das folgende Schritte aufweist:
- Ermitteln einer die Torsion des Antriebsstrangs (3) wiedergebenden mechanischen Zustandsgröße (Δα_{MODELL}) als Antwort auf die Stellgröße (m) an Hand eines Modells des Antriebsstrangs (3) und/oder der Brennkraftmaschine (1), wobei das Modell adaptierbare Modellparameter aufweist,
- Ansteuern der Brennkraftmaschine (1) mit einer Stellgröße (m) in Abhängigkeit von der ermittelten Zustandsgröße, wobei die Stellgröße (m) in Abhängigkeit von der ermittelten mechanischen Zustandsgröße (Δα_{MODELL}) festgelegt wird und die Brennkraftmaschine (1) mit der so modifizierten Stellgröße (m) angesteuert wird, so dass eine Anregung von Torsionsschwingungen unterdrückt wird,
**dadurch gekennzeichnet,**
**dass** das Modell ein LOLIMOT-Modell ist, welches das mechanische Verhalten der Brennkraftmaschine (1) und/oder des Antriebsstrangs (3) mit Fahrzeugmasse mit vorgegebenen linearen Abbildungsfunktionen (11.1-11.3) darstellt.

9. Dämpfungsverfahren nach Anspruch 8,
**dadurch gekennzeichnet,**
**dass** das Modell im wesentlichen totzeitfrei ist, wohingegen die Brennkraftmaschine (1) und/oder der Antriebsstrang (3) und/oder eine zur Drehzahlerfassung eingerichtete Messeinrichtung (7) eine Totzeit (t_{TOT}) aufweisen.

10. Dämpfungsverfahren nach Anspruch 8 oder 9,
**dadurch gekennzeichnet,**
**dass** die Modellparameter während der Fahrt adaptiert werden.

11. Dämpfungsverfahren nach einem der Ansprüche 8 bis 10,
**dadurch gekennzeichnet,**
**dass** das LOLIMOT-Modell Gewichtungsfunktionen (12.1-12.3) aufweist, die den einzelnen Abbildungsfunktionen (11.1-11.3) zugeordnet sind.

12. Dämpfungsverfahren nach einem der Ansprüche 8 bis 11,
**dadurch gekennzeichnet,**
**dass** die Modellparameter Parameter der Gewichtungsfunktionen (12.1-12.3) des LOLIMOT-Modells sind.

13. Dämpfungsverfahren nach einem der Ansprüche 8 bis 12,
**dadurch gekennzeichnet,**
**dass** die Modellparameter Parameter der linearen Abbildungsfunktionen (11.1-11.3) des LOLIMOT-Modells sind.

## Claims

1. Damping device for suppressing torsional oscillations in the drive train (3) of an internal combustion engine (1), with
- a recording device (4, 7) for determining a mechanical state variable (Δα_{MODELL}) reflecting the torsion of the drive train (3), the recording device (4, 7) having a predictor element (4) that contains a model of the drive train (3) and/or of the internal combustion engine (1) and determines the mechanical state variable (Δα_{MODELL}) as the response of the drive train (3) and/or of the internal combustion engine (1) to the correcting variable (m) using the model, said model having adaptable model parameters, and
- a control device (2) for controlling the internal combustion engine (1) with a correcting variable (m) as a function of the mechanical state variable (Δα_{MODELL}) determined, wherein
- the correcting variable (m) is fixed as a function of the mechanical state variable (Δα_{MODELL}) determined and the internal combustion engine (1) is controlled with the correcting variable (m) thus modified, so that an excitation of torsional oscillations is suppressed,
**characterised in that**
the model is a LOLIMOT model, which represents the mechanical behaviour of the internal combustion engine (1) and/or of the drive train (3) with vehicle mass, with predefined linear mapping functions (11.1-11.3).

2. Damping device according to claim 1,
**characterised in that**
the model contained in the predictor element (4) is essentially free of dead time, whereas the internal combustion engine (1) and/or the drive train (3) and/or a measuring device (7) set up to record engine speed, however, do have a dead time (t_{TOT}).

3. Damping device according to claim 1 or 2,
**characterised in that**
an adaptor unit (10) is provided for adapting the model parameters during the journey.

4. Damping device according to one of claims 1 to 3,
**characterised in that**
the LOLIMOT model has weighting functions (12.1-12.3) that are assigned to the individual mapping functions (11.1-11.3).

5. Damping device according to one of claims 1 to 4,
**characterised in that**
the model parameters are parameters of the weighting functions (12.1.-12.3) of the LOLIMOT model.

6. Damping device according to one of claims 1 to 5,
**characterised in that**
the model parameters are parameters of the linear mapping functions (11.1-11.3) of the LOLIMOT model.

7. Engine controller with a damping device according to one of the above claims.

8. Damping method for suppressing torsional oscillations in the drive train (3) of an internal combustion engine (1), comprising the following steps:
- determination of a mechanical state variable (Δα_{MODELL}) reflecting the torsion of the drive train (3) as the response to the correcting variable (m) using a model of the drive train (3) and/or of the internal combustion engine (1), said model having adaptable model parameters, and
- control of the internal combustion engine (1) with a correcting variable (m) as a function of the state variable determined, the correcting variable (m) being fixed as a function of the mechanical state variable (Δα_{MODELL}) determined and the internal combustion engine (1) being controlled with the correcting variable (m) thus modified, so that an excitation of torsional oscillations is suppressed,
**characterised in that**
the model is a LOLIMOT model, which represents the mechanical behaviour of the internal combustion engine (1) and/or of the drive train (3) with vehicle mass, with predefined linear mapping functions (11.1-11.3).

9. Damping method according to claim 8,
**characterised in that**
the model is essentially free of dead time, whereas the internal combustion engine (1) and/or the drive train (3) and/or a measuring device (7) set up to record rotational speed, however, do have a dead time (t_{TOT}).

10. Damping method according to claim 8 or 9,
**characterised in that** the model parameters are adapted during the journey.

11. Damping method according to one of claims 8 to 10,
**characterised in that**
the LOLIMOT model has weighting functions (12.1-12.3) that are assigned to the individual mapping functions (11.1-11.3).

12. Damping method according to one of claims 8 to 11,
**characterised in that**
the model parameters are parameters of the weighting functions (12.1.-12.3) of the LOLIMOT model.

13. Damping method according to one of claims 8 to 12,
**characterised in that**
the model parameters are parameters of the linear mapping functions (11.1-11.3) of the LOLIMOT model.

## Revendications

1. Dispositif d'amortissement destiné à la suppression de vibrations torsionnelles dans la chaîne cinématique (3) d'un moteur à combustion interne (1), comportant
- un dispositif de détection (4, 7) destiné à déterminer une grandeur d'état mécanique (Δα_{MODELE}) reproduisant la torsion de la chaîne cinématique (3), le dispositif de détection (4, 7) présentant un organe de prédiction (4) qui contient un modèle de la chaîne cinématique (3) et/ou du moteur à combustion interne (1) et détermine à l'aide du modèle la grandeur d'état mécanique (Δα_{MODELE}) comme réponse de la chaîne cinématique (3) et/ou du moteur à combustion interne (1) à la grandeur de réglage (m), le modèle présentant des paramètres de modèle adaptables, et
- un dispositif de réglage (2) destiné à la commande du moteur à combustion interne (1) via une grandeur de réglage (m) en fonction de la grandeur d'état mécanique déterminée (Δα_{MODELE}),
- la grandeur de réglage (m) étant définie en fonction de la grandeur d'état mécanique déterminée (Δα_{MODELE}), et le moteur à combustion interne (1) étant commandé à l'aide de la grandeur de réglage (m) ainsi modifiée, de sorte qu'une stimulation de vibrations torsionnelles est supprimée,
**caractérisé en ce que**
le modèle est un modèle LOLIMOT, qui représente le comportement mécanique du moteur à combustion interne (1) et/ou de la chaîne cinématique (3) avec la masse du véhicule, à l'aide de fonctions de représentation linéaires prédéfinies (11.1-11.3).

2. Dispositif d'amortissement selon la revendication 1,
**caractérisé en ce que**
le modèle contenu dans l'organe de prédiction (4) est quasiment sans temps mort, le moteur à combustion interne (1) et/ou la chaîne cinématique (3) et/ou un dispositif de mesure (7) aménagé pour l'enregistrement de la vitesse présentant en revanche un temps mort (t_{MORT}).

3. Dispositif d'amortissement selon l'une quelconque des revendications 1 ou 2,
**caractérisé en ce que**
est prévue une unité d'adaptation (10) destinée à l'adaptation des paramètres du modèle durant le parcours.

4. Dispositif d'amortissement selon l'une quelconque des revendications 1 à 3,
**caractérisé en ce que**
le modèle LOLIMOT présente des fonctions de pondération (12.1-12.3) qui sont affectées à chacune des fonctions de représentation (11.1-11.3).

5. Dispositif d'amortissement selon l'une quelconque des revendications 1 à 4,
**caractérisé en ce que**
les paramètres du modèle sont des paramètres des fonctions de pondération (12.1-12.3) du modèle LOLIMOT.

6. Dispositif d'amortissement selon l'une quelconque des revendications 1 à 5,
**caractérisé en ce que**
les paramètres du modèle sont des paramètres des fonctions de représentation linéaires (11.1-11.3) du modèle LOLIMOT.

7. Commande de moteur dotée d'un dispositif d'amortissement selon l'une quelconque des précédentes revendications.

8. Procédé d'amortissement destiné à la suppression de vibrations torsionnelles dans la chaîne cinématique (3) d'un moteur à combustion interne (1) qui présente les étapes suivantes :
- Détermination d'une grandeur d'état mécanique (Δα_{MODELE}) reproduisant la torsion de la chaîne cinématique (3) en réponse à la grandeur de réglage (m), à l'aide d'un modèle de la chaîne cinématique (3) et/ou du moteur à combustion interne (1), le modèle présentant des paramètres de modèle adaptables,
- Commande du moteur à combustion interne (1) à l'aide d'une grandeur de réglage (m) en fonction de la grandeur d'état déterminée, la grandeur de réglage (m) étant définie en fonction de la grandeur d'état mécanique déterminée (Δα_{MODELE}) et le moteur à combustion interne (1) étant commandé à l'aide de la grandeur de réglage (m) ainsi modifiée, de sorte qu'une stimulation de vibrations torsionnelles est supprimée,
**caractérisé en ce que**
le modèle est un modèle LOLIMOT, qui représente à l'aide de fonctions de représentation linéaires prédéfinies (11.1-11.3) le comportement mécanique du moteur à combustion interne (1) et/ou de la chaîne cinématique (3) avec la masse du véhicule.

9. Procédé d'amortissement selon la revendication 8,
**caractérisé en ce que**
le modèle est quasiment sans temps mort, le moteur à combustion interne (1) et/ou la chaîne cinématique (3) et/ou un dispositif de mesure (7) aménagé pour l'enregistrement de la vitesse présentant en revanche un temps mort (t_{MORT}).

10. Procédé d'amortissement selon l'une quelconque des revendications 8 ou 9,
**caractérisé en ce que**
les paramètres du modèle sont adaptés durant le parcours.

11. Procédé d'amortissement selon l'une quelconque des revendications 8 à 10,
**caractérisé en ce que**
le modèle LOLIMOT présente des fonctions de pondération (12.1-12.3) qui sont affectées aux différentes fonctions de représentation (11.1-11.3).

12. Procédé d'amortissement selon l'une quelconque des revendications 8 à 11,
**caractérisé en ce que**
les paramètres du modèle sont des paramètres des fonctions de pondération (12.1-12.3) du modèle LOLIMOT.

13. Procédé d'amortissement selon l'une quelconque des revendications 8 à 12,
**caractérisé en ce que**
les paramètres du modèle sont des paramètres des fonctions de représentation linéaires (11.1-11.3) du modèle LOLIMOT.
